# EUROPÄISCHE PATENTSCHRIFT

(11) **EP 0 936 472 B1**
(45) Veröffentlichungstag und Bekanntmachung des Hinweises auf die Patenterteilung: **22.04.2009**
(21) Anmeldenummer: 99102591.7
(22) Anmeldetag: 11.02.1999
(51) Int. Cl.: G01S 13/93, G01S 13/86, G01S 7/40, G01S 7/497

(54) **Verfahren und Einrichtung zur Prüfung der Funktionsweise einer Abstandsregeleinrichtung eines Kraftfahrzeuges**
Method and device for testing the functioning of a distance controlling device in a car
Procédé et appareil pour tester le fonctionnement d'un dispositif de régulation de distance dans une voiture

(30) Priorität: 17.02.1998 DE 19806373
(43) Veröffentlichungstag der Anmeldung: 18.08.1999
(73) Patentinhaber: Continental Automotive GmbH, 30165 Hannover (DE)
(72) Erfinder: Watzal, Matthias, 65321 Heidenrod (DE); Reuter, Hagen Dr., 60316 Frankfurt/M. (DE); Heinrichs-Bartscher, Sascha, 65843 Sulzbach (DE)

(56) Entgegenhaltungen:
- EP-A- 0 512 872
- DE-A- 3 700 009
- US-A- 5 633 705

## Beschreibung

Die Erfindung betrifft ein Verfahren zu Prüfung der Funktion einer Abstandsregelung eines Kraftfahrzeuges, wobei die Abstandsregelung die die Regelsituation wiedergebenden Daten bestimmt und in Abhängigkeit von diesen Daten den Abstand zu einem vorrausfahrenden Fahrzeug bestimmt sowie eine Einrichtung zur Durchführung des Verfahrens.

Aus der EP 0 512 872 B1 ist ein Verfahren zur Erkennung von Hindernissen bekannt, die sich insbesondere vor einem Kraftfahrzeug befinden. Mittels einer Videokamera, die sich an Bord des Kraftfahrzeuges befindet, wird ein Videobild einer Szene vor dem Fahrzeug erzeugt. Mit Hilfe eines an Bord des Fahrzeuges befindlichen Telemetriegerätes werden Entfernungen von Hindernissen der Szene, bezogen auf das Fahrzeug, ermittelt. Die von dem Telemetriegerät ausgesendeten sowie die von diesem empfangenen Signale sind dabei mit Teilsignalen des Videosignals synchronisiert. Dabei werden in dem Videobild in synchronisierter Weise die telemetrischen Daten des Telemetriegerätes dargestellt. Diese Verfahrensweise ermöglicht lediglich die Überprüfung der ermittelten Abstandswerte.

Bei einem Abstandsregelgerät für Kraftfahrzeuge werden aber zur Einstellungdes Abstandes vielfältige Daten von dem Abstandsregelgerät selbst ermittelt, wie z. B. ein voraussichtlicher Fahrkorridor und welche erfaßten Objekte für die Regelung in Frage kommen. Die dem resultierenden Abstandwert zugrunde liegenden Regeldaten können mit dem beschriebenen Verfahren nicht überprüft werden.

Der Erfindung liegt somit die Aufgabe zugrunde, ein Verfahren und eine Einrichtung zur Prüfung der Funktionsweise der Abstandsregeleinrichtung anzugeben, mit welchen eine Vielzahl der zur Abstandsregelung in einem Kraftfahrzeug notwendigen Daten in einfacher Weise auf ihre Richtigkeit untersucht werden kann.

Erfindungsgemäß wird die Aufgabe dadurch gelöst, daß unabhängig von der Abstandsregelung eine Abbildung der in Fahrtrichtung des Kraftfahrzeuges bestehenden Fahrsituation erzeugt wird, welche mit den die Regelsituation wiedergebenden Daten verglichen und bei Abweichung mindestens eines Wertes auf Fehler erkannt wird.

Der Vorteil der Erfindung besteht darin, das alle von der Abstandsregeleinrichtung ermittelten Werte mit den Werten verglichen werden, die eine autark arbeitende Referenzeinrichtung ermittelt hat.

Bei Erkennung des Fehlers kann sowohl ein Warnsignal ausgelöst als auch eine automatische Fehlerkorrektur aktiviert werden.

Bei einer Weiterbildung der Erfindung ist eine Bildaufnahmeeinrichtung, welche die in Fahrtrichtung des Kraftfahrzeuges vorhandene Situation abbildet, mit einer, eine Auswerteeinrichtung für Signale der Bildaufnahmeeinrichtung aufweisenden Vergleichseinrichtung verbunden, wobei die Vergleichseinrichtung mindestens einen Regelparameter der Abstandsregeleinrichtung mit einem zum selben Zeitpunkt von einer Bildaufnahmeeinrichtung ermittelten Referenzparameter vergleicht und bei Abweichung des Regelparameters von dem Referenzparameter auf einen Fehler der Abstandsregeleinrichtung erkennt.

Die Erfindung hat den Vorteil, daß alle Regelparameter mit Hilfe einer die tatsächliche Verkehrssituation wiedergebenden Referenzeinrichtung verglichen werden. Somit können alle Regelparameter in Echtzeit überprüft und entsprechend ausgewertet werden.

Da die Auswerteeinrichtung die von der Bildaufnahmeeinrichtung gelieferten Signale in digitale Daten umsetzt, kann eine Recheneinheit der Vergleichseinrichtung in einfacher Weise die ebenfalls in digitaler Form vorhandenen Regeldaten der Abstandsregeleinrichtung mit denen von der Bildaufnahmeeinrichtung gelieferten Daten vergleichen. Bei Nichtübereinstimmung kann sowohl ein Fehler des Sensors, welcher dejustiert sein kann, als auch ein Verarbeitungsfehler der Abstandsregeleinrichtung festgestellt werden.

In einer Ausgestaltung werden die zum selben Zeitpunkt von der Bildaufnahmeeinrichtung ermittelten Signale und die aus den Regelparametern der Abstandsregeleinrichtung gebildeten, die Regelsituation wiedergebenden Daten speicherfähig in einer Abbildung überlagert.

Dies geht in einfacher Weise, da die Recheneinheit die von dem Abstandsregelgerät gelieferten Daten graphikfähig als x, y-Koordinaten ausgibt, die in dem Bild der Bildaufnahmeeinrichtung den realen Objekten überlagert sind. Das so erzeugte Abbild enthält sowohl die von der Bildaufnahmeeinrichtung ermittelten Daten in Form der Darstellung der realen Objekte als auch gleichzeitig die von der Abstandsregeleinrichtung bestimmten Daten als grafische Symbole.

Somit wird auf einfache Weise sichtbar gemacht, ob das von der Abstandregeleinrichtung ermittelten Regelobjekt auch das ist, an welchem sich der Fahrer des Fahrzeuges auf Grund seiner subjektiven Einschätzung der Verkehrssituation orientieren würde.

In einer Weiterbildung sind alle Abbildungen innerhalb eines vorgegebenen Zeitintervalls in einem auswechselbaren Festwertspeicher der Vergleichseinrichtung abgelegt. Die Vielzahl der bei einer Abstandsregeleinrichtung zu verarbeitenden Daten und die von der Bildaufnahmeeinrichtung bestimmten Daten werden in einem gemeinsamen Speicher abgelegt. Da der Speicher auswechselbar ist, können die während einer Fahrt gewonnen Daten später im Labor an einem Laborrechner ausgewertet werden, der mit dem Festwertspeicher verbunden ist.

Zur sofortigen Prüfung werden die überlagerten Abbildungen an einem Anzeigegerät in Echtzeit zur Anzeige gebracht, wobei während des laufenden Meßvorganges oder des Auswertevorganges eine Abweichung der überlagerten Abbilder sofort erkannt werden kann.

Um Speicherkapazität zu sparen, werden während des Meßbetriebes vom Bediener der Einrichtung zu den Zeitpunkten, bei welchen sich auf einer Anzeigeeinheit eine Diskrepanz zwischen den von der Abstandsregeleinrichtung und der Bildaufnahmeeinrichtung ermittelten Daten ergibt, durch Betätigung einer Befehlseinrichtung zur Abbildspeicherung lediglich die in einem vorgegebenen Zeitraum ermittelten überlagerten Abbilder in dem Festwertspeicher abgespeichert.

Zwischen der Abstandsregeleinrichtung und der Vergleichseinrichtung ist eine bidirektionale Datenleitung zum Austausch von Daten zwischen der Vergleichseinheit, der Abstandsregeleinrichtung und des Kraftfahrzeuges vorgesehen. Auf diese Art und Weise können einfach die vom Abstandssensor ermittelten Objektdaten, die von der Abstandsregeleinrichtung bestimmten Regeldaten, als auch fahrzeugdynamische Daten vom Kraftfahrzeug an die Vergleichseinheit geliefert werden bzw. in entgegengesetzter Richtung von der Vergleichseinheit Test- und/oder Korrekturdaten an die Abstandsregeleinrichtung gesendet werden.

Vorteilhafterweise ist eine Datenabfrageeinrichtung zwischen Abstandsregeleinrichtung und Vergleichseinrichtung geschaltet, die die Daten zeitsynchron aus der bidirektionalen Datenleitung in die Vergleichseinrichtung ein- bzw. ausliest. Vorteilhafterweise ist die bidirektionale Datenleitung ein an sich im Fahrzeug vorhandener Datenbus.

In einfacher Art und Weise ist die Vergleichseinrichtung mit einer Diagnoseanschlußvorrichtung verbunden. Diese Diagnoseanschlußvorrichtung ist in einfacher Weise der im Fahrzeug an sich vorhandene Diagnosestecker, welcher zum Austausch der Daten genutzt werden kann.

Je nachdem, welche Regelparameter ausgewertet werden sollen, wird die überlagerte Abbildung in verschiedenen Abbildungsbetriebsarten an die Anzeigevorrichtung ausgegeben. Diese Ausgabe der überlagerten Abbildung in den verschiedenen Betriebsarten kann sowohl nacheinander aber auch gleichzeitig erfolgen, wodurch weitere Vergleichsmöglichkeiten geschaffen werden.

In einer Ausgestaltung weist die Vergleichseinrichtung einen Meßbetriebsmode zur Datenaufnahme und einen Datenauswertebetriebsmode auf, in welchen die verschiedenen Abbildungsbetriebsarten genutzt werden können.

Die Erfindung läßt zahlreiche Ausführungsformen zu. Eine davon soll anhand der in der Figur dargestellten Zeichnungen näher erläutert werden.

Es zeigen
- Fig. 1: Abstandsregeleinrichtung in einem Kraftfahrzeug,
- Fig. 2: erfindungsgemäße Prüfeinrichtung.
- Fig. 3: Darstellung auf der Anzeigeeinrichtung

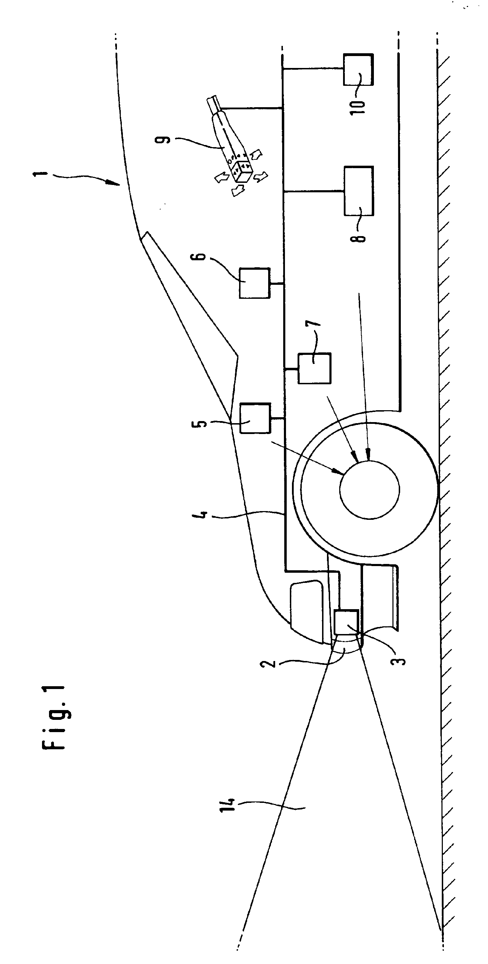

In Figur 1 ist an der Stoßstange 2 eines Kraftfahrzeuges 1 ein automatisches Geschwindigkeits- und Abstandsregelsystem 3 zur Einhaltung des Sicherheitsabstandes von Fahrzeugen angeordnet. Bei Annäherung des geregelten Fahrzeuges an ein langsameres Fahrzeug wird automatisch der Abstand und die Geschwindigkeit zum vorausfahrenden Fahrzeug reguliert. Ist die Fahrspur wieder frei, beschleunigt das System das Fahrzeug auf die zuvor eingestellte Wunschgeschwindigkeit.

Das Ein-/Ausschalten des Geschwindigkeits- und Abstandsregelsystems 3 erfolgt per Bedienhebel 9. Auch die Wunschgeschwindigkeit des Fahrzeuges wird mit Hilfe des Bedenhebels 9 eingestellt. Die vom Fahrer gewünschte Reisegeschwindigkeit wird so gespeichert, erhöht oder verringert.

Über ein Bussystem 4 ist das automatische Geschwindigkeits- und Abstandsregelsystem 3 mit der Motorsteuerung 5, der Bremse 7 und dem Getriebe 8 verbunden. Elektronische Befehle regulieren den Abstand und die Geschwindigkeit zum vorausfahrenden Fahrzeug. Über eine Anzeigeeinheit 6, die ebenfalls von dem Geschwindigkeits- und Abstandsregelsystem 3 über das Bussystem 4, vorzugsweise einen CAN-Bus, angesteuert wird, wird die aktuelle Geschwindigkeit und auch der Abstand zum vorausfahrenden Fahrzeug angezeigt.

Ein ebenfalls an das Bussystem 4 angeschlossener Diagnosestecker 10 ermöglicht den Anschluß von externen Geräten an das Bussystem.

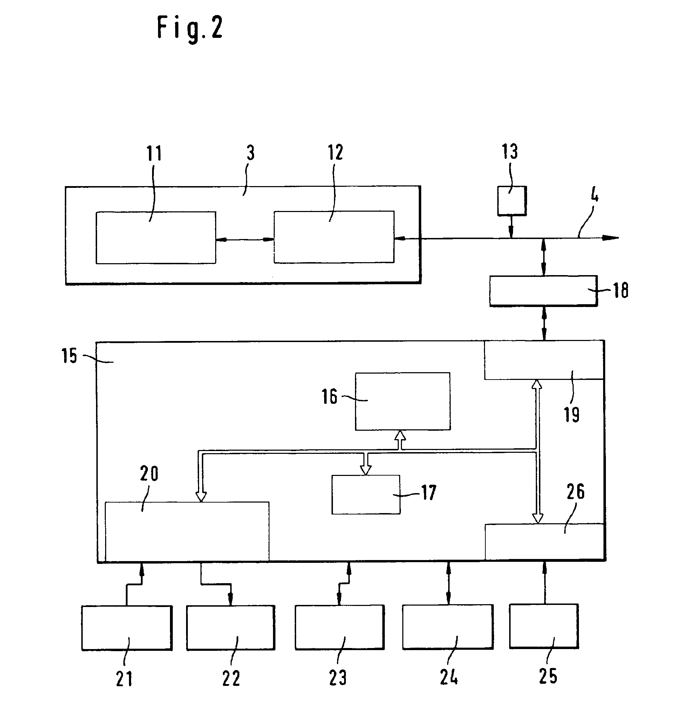

Wie in Figur 2 dargestellt, bildet das automatische Geschwindigkeits- und Abstandsregelsystem 3 eine bauliche Einheit zwischen Sensor 11 und dem Abstandsregelgerät 12.

Das Abstandsregelgerät 12 ermittelt aus Signalen von Drehzahlsensoren 13, welche an den einzelnen Fahrzeugrädern angeordnet sind, eine voraussichtliche Fahrspur des zu regelnden Fahrzeuges.

Der Sensor 11 ist dabei ein Radar- oder Lasersensor, der in regelmäßigen Abständen, z. B. alle 5 ms in Fahrtrichtung des Fahrzeuges Signale aussendet, welche von den Fahrzeugen, die sich im Signalstrahl 14 befinden, reflektiert werden. Aus diesen zurückgesendeten Signalen wird von einer im Sensor 11 integrierten Signalaufbereitungsschaltung der Abstand und die Relativgeschwindigkeit der vorausfahrenden Fahrzeuge bestimmt. Diese Meßergebnisse werden an das Abstandsregelsystem 12 weitergegeben.

Wie in Figur 2 dargestellt, ist an das Bussystem 4 des Kraftfahrzeuges eine Datenabfrageeinrichtung 18 angeschlossen, welche mit einer Parallelschnittstelle 19 einer Diagnoseeinrichtung 15 verbunden ist. Diese Diagnoseeinrichtung 15 besteht aus einer Recheneinheit 16, die mit einem als Wechselfestplatte ausgebildeten Festwertspeicher 17 verbunden ist. Innerhalb der Diagnoseeinrichtung 15 erfolgt der Datenaustausch bidirektional, wobei die Recheneinheit 16 mit einer Bildauswerteeinheit 20 verbunden ist, welche im konkreten Fall eine Videograbberkarte ist.

Die Diagnoseeinrichtung 15 ist über Bedienelemente, wie z. B. eine Tastatur 23 und eine Maus 24, steuerbar. So wird bei der Diagnoseeinrichtung 15 mit Hilfe der Bedienelemente 23, 24 der Meßbetrieb oder Auswertebetrieb eingestellt. Die Auswerteeinrichtung 20 ist mit einer Videokamera 21 verbunden, die Videobilder, welche die tatsächliche Objektstuation in Fahrtrichtung des Kraftfahrzeuges wiedergeben, an die Auswerteeinrichtung 20 liefert. Darüber hinaus ist diese Auswerteeinrichng 20 mit einem Monitor 22 verbunden.

Die in Figur 2 beschriebene mobile Einrichtung dient der Datenenfassung im Fahrzeug und der anschließenden Auswertung der aufgezeichneten Daten.

Für den Meßbetrieb sind die Diagnoseeinrichtung 15 sowie die Videokamera 21 mit einem 12/24 V-Anschluß zur Installation im Kraftfahrzeug versehen. Mittels einem Taster 25, welcher über eine Parallelschnittstelle 26 mit der Recheneinheit 16 verbunden ist, werden Auslöseimpulse zur Speicherung der Daten auf der Wechselfestplatte 17 eingegeben.

Im Auswertebetrieb kann das Programm auf dem soeben beschriebenen Meßsystem laufen. Es kann aber auch auf einem beliebigen PC ausgewertet werden. In diesem Fall sind Monitor 22, Tastatur 23 und Maus 24 notwendig.

Im Meßbetrieb arbeitet die beschriebene Diagnoseeinrichtung 15 wie folgt.

Über den CAN-Bus 4 werden die von der Abstandsregeleinrichtung 12 kommenden Daten eingelesen. Pro Zeiteinheit kommen Objektdaten (Abstand , Relativgeschwindigkeit) und regelspezifischen Daten von der Abstandsregeleinrichtung 12 (vorraussichtlicher Fahrkorridor des zu regelnden Fahrzeuges, vorraussichtlicher Fahrkorridor des Regelobjektes) sowie Fahrzeugmeßwerte, welche den Zustand des Fahrzeuges beschreiben. Solche Fahrzeugmeßwerte sind beispielsweise die Geschwindigkeit des Fahrzeuges, die Beschleunigung usw.

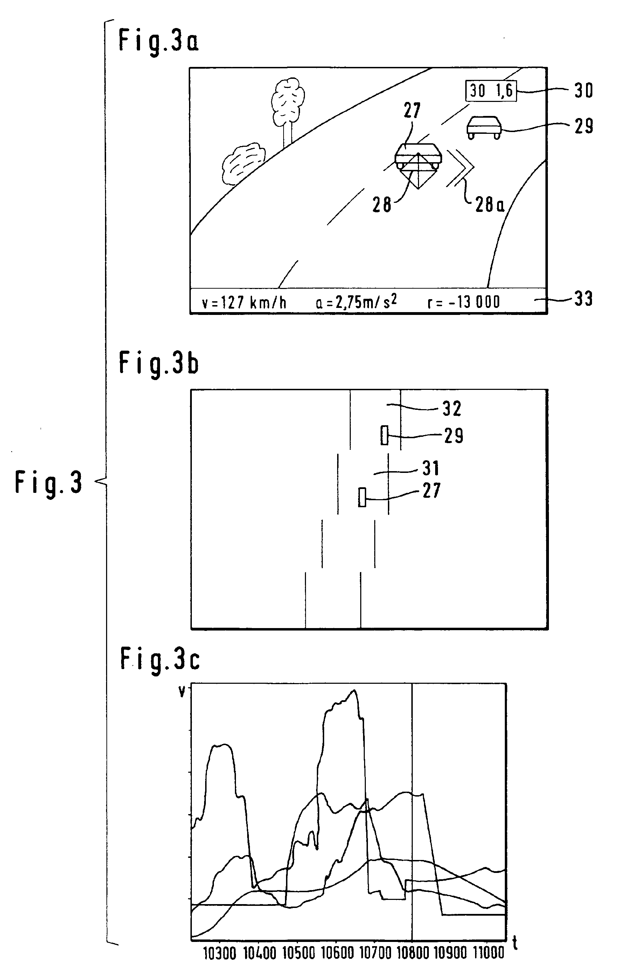

Mit Hilfe der Auswerteeinrichtung 20 werden in das von der Videokamera 21 kommende Videobild folgende Objekte eingeblendet und überlagert. (Figur 3a) Für das von der Abstandsregeleinrichtung 12 erkannte Regelobjekt 27 wird eine geometrische Abbildung 28, z. B. in Form eines Fahrspurbalkens oder eines Kreuzes auf das sogenannte Regelobjekt eingeblendet. Diese geometrische Figur vergrößert sich bzw. verkleinert sich mit der sich ändernden Entfernung des Regelobjektes vom zu regelnden Fahrzeug 1. Des weiteren wird diese geometrische Figur entsprechend der von der Abstandsregeleinrichtung 12 ermittelten Kurvenradius (Fahrschlauchkrümmung) und der relativen Position des Regelobjektes nach rechts bzw. nach links bewegt (Pfeil 28 a).

Auf diese Art und Weise ist also nicht bloß feststellbar, ob das Abstandsregelgerät 12 den richtigen Abstand eingestellt hat, sondern es wird gleichzeitig überprüft, ob das richtige Regelobjekt ausgewählt wurde und ob die vorausgesagte Fahrspur dem Straßenverlauf entspricht.

Für weitere Objekte 29, die von dem Sensor 11 erfaßt wurden, werden entsprechend ihrer Bewegung wandernde Felder 30 in dem Videobild eingeblendet, welche deren Objektdaten (Relativgeschwindigkeit und Abstand) enthalten. Das überlagerte Videobild wird komprimiert und mit den dazugehörigen, von der Abstandsregeleinrichtung 12 gelieferten Daten zusammengebracht und digitalisiert in dem Wechselfestwertspeicher 17 abgelegt.

Nach Betätigung des Tasters 25 werden die Daten der letzten 20 s und die Daten der nächsten 20 s in einer Datei auf der Wechselplatte 17 gespeichert.

Vorteilhafterweise kann im Fahrbetrieb bereits der Monitor 22 angeschlossen sein, der das in der Auswerteeinrichtung 20 überlagerte Videobild anzeigt, wobei die Anzeige auch in anderen Anzeigebetriebsarten erfolgen kann.

Die Diagnoseeinrichtung 15 ist mit Klemme 15 des Kraftfahrzeuges verbunden und startet automatisch beim Starten des Kraftfahrzeuges den Meßbetrieb.

Das Meßprogramm endet bei Ausschalten der Zündung des Kraftfahrzeuges.

Die von der Abstandsregeleinrichtung 12 bestimmten Daten werden, wie schon erläutert im 60 ms Takt erzeugt. Das zum Vergleich notwendige Videobild muß nicht zwangsläufig im selben Takt erneuert werden. Während des Meßbetriebes werden die von der Videokamera 21 aufgenommenen Bilder und die von der Abstandsregeleinrichtung 12 gelieferten Daten von der Diagnoseeinrichtung 15 zentral synchronisiert wodurch gewährleistet wird, daß der Abstandsensor 11 und die Videokamera 21 zeitgleich arbeiten und somit dieselbe Situation aufnehmen.

Die Auswertung der gemessenen Daten kann sowohl mit der Diagnoseeinrichtung 15 im Fahrzeug, aber auch auf jedem beliebigen anderen Computer erfolgen. Voraussetzung ist nur, daß die Festplatte 17 mit den enthaltenden überlagerten Daten dem Computer zur Auswertung zur Verfügung gestellt wird. Mittels der Bedieneinrichtungen 23 und 24 wird das Auswerteprogramm gesteuert.

Während des Auswertebetriebes, sind auf dem Monitor 22 neben dem überlagerten Videobild noch weitere Bildschirmfenster geöffnet (Figur 3b, 3c). In einem zweiten Bildschirmfenster (Figur 3b) ist eine Draufsicht aller vom Sensor erfaßten Objekte mit der voraussichtlichen Fahrspur gezeigt, welcher von der Abstandsregeleinrichtung 12 bestimmt wurde. Das Regelobjekt 27 hat den vorraussichtlichen Fahrkorridor 31 und das weitere Objekt 29 den Fahrkorridor 32.

In einem dritten Bildfenster (Figur 3c) kann eine Zeitdarstellung mit Meßwerten z.B. der Relativgeschwindigkeit des Regelobjektes über die Zeitachse dargestellt werden, wobei Zoomfunktionen für die Zeitachse möglich sind.

Auf dem Monitor 22 kann im unteren Bereich über die ganze Bildbreite ein Balken 33 eingeblendet werden, in dem Daten aus dem Bereich der Fahrzeugmeßwerte stehen, wie z. B. Datum, Zeit, Fahrzeuggeschwindigkeit und - beschleunigung, gefahrener Kurvenradius, Zustandswerte (z. B. Fahrer bremst, Fahrer gibt Gas) usw.

Insbesondere die Verwendung einer Festplatte zur Abspeicherung der mit den von der Abstandsregeleinrichtung 12 ermittelten Daten auf einem Videobild in Echtzeit bietet eine kostengünstige Möglichkeit die großen Datenmengen der Bilddatenübertragung zu verarbeiten. Diese Diagnoseeinrichtung wird vorteilhafterweise mit dem Bordnetz betrieben.

## Patentansprüche

1. Verfahren zur Prüfung der Funktion einer Abstandsregelung eines Kraftfahrzeuges, wobei die Abstandsregelung die die Regelsituation wiedergebenden Daten bestimmt und in Abhängigkeit von diesen Daten den Abstand zu einem vorausfahrenden Fahrzeug einstellt, **dadurch gekennzeichnet, daß** unabhängig von der Abstandsregelung eine Abbildung der in Fahrtrichtung des Kraftfahrzeuges bestehenden Fahrsituation erzeugt wird, welche mit den die Regelsituation wiedergebenden Daten verglichen und bei Abweichung mindestens eines Wertes auf Fehler erkannt wird.

2. Verfahren nach Anspruch 1 **dadurch gekennzeichnet, daß** bei Erkennung des Fehlers eine Warnfunktion ausgelöst wird.

3. Verfahren nach Anspruch 1 oder 2 **dadurch gekennzeichnet, daß** bei Erkennung des Fehlers dieser automatisch korrigiert wird.

4. Einrichtung zur Prüfung der Funktionsweise einer Abstandsregeleinrichtung eines Kraftfahrzeuges, wobei die Abstandsregeleinrichtung in Abhängigkeit der von ihr bestimmten die Regelsituation wiedergebenden Regeldaten den Abstand des Kraftfahrzeuges zu einem vorausfahrenden Fahrzeug einstellt, **dadurch gekennzeichnet, daß** eine Bildaufnahmeeinrichtung (21) mit einer Vergleichseinrichtung (15) verbunden ist, wobei die, eine Auswerteeinrichtung (20) für Signale der Bildaufnahmeeinrichtung (21) aufweisende Vergleichseinrichtung mindestens einen Regelparameter der Abstandsregeleinrichtung (3) mit einem zum selben Zeitpunkt von der Bildaufnahmeeinrichtung (21) ermittelten Referenzparameter vergleicht und bei Abweichung des Regelparameters von dem Referenzparameter auf einen Fehler der Abstandsregeleinrichtung (3) erkennt.

5. Einrichtung nach Anspruch 4, **dadurch gekennzeichnet, daß** die Auswerteeinheit (20) die zum selben Zeitpunkt von der Bildaufnahmeeinrichtung (21) ermittelten Signale und die aus den Regelparametern der Abstandsregeleinrichtung (3) gebildete Regelsituation speicherfähig in einer Abbildung überlagert.

6. Einrichtung nach Anspruch 5, **dadurch gekennzeichnet, daß** alle Abbildungen innerhalb eines vorgegebenen Zeitintervalls in einem der Vergleichseinrichtung (15) zugeordneten Festwertspeicher (17) abgelegt sind.

7. Einrichtung nach Anspruch 6, **dadurch gekennzeichnet, daß** eine Befehlseinrichtung (25) zur Abbildspeicherung vorhanden ist, deren Betätigung die Speicherung der Abbildungen in einem vorbestimmten vergangenen Zeitraum und einem weiteren vorbestimmten zukünftigen Zeitraum im Festwertspeicher (17) der Vergleichseinrichtung (15) auslöst.

8. Einrichtung nach Anspruch 6 oder 7, **dadurch gekennzeichnet, daß** die überlagerte Abbildung in Echtzeit an eine Anzeigeeinheit (22) ausgebbar ist.

9. Einrichtung nach Anspruch 6, **dadurch gekennzeichnet, daß** die überlagerte Abbildung in verschiedenen Abbildungsbetriebsarten an die Anzeigeeinrichtung (22) nacheinander oder gleichzeitig ausgebbar ist.

10. Einrichtung nach Anspruch 4, **dadurch gekennzeichnet, daß** zwischen der Abstandregeleinrichtung (3) und der Vergleichseinrichtung (15) eine bidirektionale Datenleitung (4) zum Austausch von Test- und/oder Korrekturdaten von der Vergleichseinrichtung (15) an die Abstandsregeleinrichtung (3) vorhanden ist.

11. Einrichtung nach Anspruch 8, **dadurch gekennzeichnet, daß** der Vergleichseinrichtung (15) Daten der Abstandsregeleinrichtung (3) und fahrzeugdynamische Daten des Kraftfahrzeuges (1) zur Auswertung über eine an sich im Kraftfahrzeug vorhandene Fahrzeuganschlußvorrichtung (10), insbesondere einer Diagnoseanschlußvorrichtung, zugeführt werden.

12. Einrichtung nach Anspruch 9, **dadurch gekennzeichnet, daß** eine Datenabfrageeinrichtung (18) über die Diagnoseanschlußvorrichtung (10) die Daten zeitsynchron aus einem Datenbus (4) des Kraftfahrzeuges (1) in die Vergleichseinrichtung (15) ein- bzw. ausliest.

13. Einrichtung nach Anspruch 4, **dadurch gekennzeichnet, daß** die Vergleichseinrichtung (15) einen Meßbetriebsmode zur Datenaufnahme und einen Datenauswertebetriebsmodus aufweist.

## Claims

1. Method for testing the function of a distance control device of a motor vehicle, wherein the distance control device determines the data that expresses the control situation and, as a function of said data, sets the distance relative to a vehicle travelling in front, **characterised in that** independently of the distance control device, a depiction of the driving situation that exists in the direction of travel of the motor vehicle is generated, said depiction being compared with the data that expresses the control situation and an error is detected if there is a variation in at least one value.

2. Method according to claim 1, **characterised in that** a warning function is triggered if an error is detected.

3. Method according to claim 1 or 2, **characterised in that** if an error is detected it is corrected automatically.

4. Device for testing the functionality of a distance control device of a motor vehicle, wherein the distance control device sets the distance of the motor vehicle relative to a preceding vehicle as a function of the control data that has been determined by said distance control device and expresses the control situation, **characterised in that** an image recording device (21) is connected to a comparison device (15), wherein the comparison device, which has an analysis device (20) for evaluating signals of the image recording device (21), compares at least one control parameter of the distance control device (3) with a reference parameter which is determined at the same instant by the image recording device (21) and, if the control parameter varies from the reference parameter, detects an error in the distance control device (3).

5. Device according to claim 4, **characterised in that** the analysis unit (20) superimposes the signals ascertained at the same instant by the image recording device (21) and the control situation formed from the control parameters of the distance control device (3) in one depiction in a form which can be stored.

6. Device according to claim 5, **characterised in that** all depictions within a preset time period are stored in a read-only memory (17) which is assigned to the comparison device (15).

7. Device according to claim 6, **characterised in that** a command device (25) for picture storage is present whose activation initiates the storage of the depictions for a predefined past time period and a further predefined future time period in the read-only memory (17) of the comparison device (15).

8. Device according to claim 6 or 7, **characterised in that** the superimposed depiction can be output to a display unit (22) in real time.

9. Device according to claim 6, **characterised in that** the superimposed depiction can be output to the display device (22) sequentially or concurrently in various depiction operating modes.

10. Device according to claim 4, **characterised in that** a bidirectional data line (4) is provided between the distance control device (3) and the comparison device (15) for the purpose of transferring test data and/or correction data from the comparison device (15) to the distance control device (3).

11. Device according to claim 8, **characterised in that** data from the distance control device (3) and dynamic vehicle data from the motor vehicle (1) are supplied to the comparison device (15) for analysis via a vehicle interface unit (10), in particular a diagnostics interface unit, which is already present per se in the motor vehicle

12. Device according to claim 9, **characterised in that** a data query device (18) reads in or reads out the data from a data bus (4) of the motor vehicle (1) into the comparison device (15) in a time-synchronous manner via the diagnostics interface unit (10).

13. Device according to claim 4, **characterised in that** the comparison device (15) has a measurement operating mode for recording data and a data analysis operating mode.

## Revendications

1. Procédé pour vérifier le fonctionnement d'un régulateur de distance d'un véhicule automobile, dans lequel la régulation de distance détermine les données qui reproduisent la situation de régulation et, en fonction de ces données, règle la distance à un véhicule qui précède, **caractérisé en ce qu'**indépendamment de la régulation de distance, une représentation de la situation de marche existant dans la direction de la marche du véhicule automobile est fournie, qui est comparée aux données reproduisant la situation de régulation et, en présence d'un écart d'au moins une certaine valeur, une erreur est détectée.

2. Procédé selon la revendication 1, **caractérisé en ce que**, lors de détection de l'erreur, une fonction d'avertissement est déclenchée.

3. Procédé selon la revendication 1 ou 2, **caractérisé en ce que**, lors de la détection de l'erreur, cette dernière est automatiquement corrigée.

4. Dispositif pour vérifier le mode de fonctionnement d'un dispositif de régulation de distance d'un véhicule automobile, dans lequel le dispositif de régulation de distance règle la distance du véhicule à un véhicule qui précède en fonction des données de régulation reproduisant la situation de régulation qu'il a déterminées, **caractérisé en ce qu'**un dispositif de prise de vues (21) est relié à un dispositif de comparaison (15), le dispositif de comparaison, qui présente un dispositif d'analyse (20) pour des signaux du dispositif de prise de vues (21), comparant alors au moins un paramètre de régulation du dispositif de régulation de distance (3) à un paramètre de référence obtenu au même instant par le dispositif de prise de vues (21) et détectant une erreur du dispositif de régulation de distance (3) en présence d'un écart du paramètre de régulation par rapport au paramètre de référence.

5. Dispositif selon la revendication 4, **caractérisé en ce que** le dispositif d'analyse (20) superpose les signaux obtenus au même instant par le dispositif de prise de vues (21) et la situation de régulation formée à partir des paramètres de régulation du dispositif de régulation de distance (3), pour former une représentation avec possibilité de mémorisation,

6. Dispositif selon la revendication 5, **caractérisée en ce que** toutes les représentations formées dans un intervalle de temps prédéterminé sont enregistrées dans une mémoire morte (17) associée au dispositif de comparaison (15).

7. Dispositif selon la revendication 6, **caractérisé en ce qu'**il est prévu un dispositif de commande (25) pour la mémorisation des représentations, dont l'actionnement déclenche la mémorisation des représentations d'une période passée prédéterminée et d'une autre période future prédéterminée dans la mémoire morte (17) du dispositif de comparaison (15).

8. Dispositif selon la revendication 6 ou 7, **caractérisé en ce que** la représentation superposée peut être sortie en temps réel dans une unité d'affichage (22).

9. Dispositif selon la revendication 6, **caractérisé en ce que** la représentation superposée peut être sortie successivement ou simultanément dans différents modes de travail de représentation sur le dispositif d'affichage (22).

10. Dispositif selon la revendication 4, **caractérisé en ce que**, entre le dispositif de régulation de distance (3) et le dispositif de comparaison (15), est prévue une ligne de données (4) bidirectionnelle pour l'échange de données de test et/ou de correction entre le dispositif de comparaison (15) et le dispositif de régulation de distance (3).

11. Dispositif selon la revendication 8, **caractérisé en ce que** des données du dispositif de régulation de distance (3) et des données dynamiques du véhicule automobile (1) sont envoyées pour l'analyse au dispositif de comparaison (15) par l'intermédiaire d'un dispositif de connexion de véhicule (10), en particulier d'un dispositif de connexion de diagnostic, présent en soi dans le véhicule automobile.

12. Dispositif selon la revendication 9, **caractérisé en ce qu'**un dispositif d'interrogation de données (18) de manière synchronisée, extrait les données d'un bus de données (4) du véhicule automobile (1) et les entre dans le dispositif de comparaison (15), par l'intermédiaire de dispositif de connexion de diagnostic (10),

13. Dispositif selon la revendication 4, **caractérisé en ce que** le dispositif de comparaison (15) présente un mode de travail avec mesure pour l'entrée de données et un mode de travail avec analyse des données.
